# EUROPEAN PATENT APPLICATION

(11) **EP 1 716 753 A1**
(43) Date of publication of application: **02.11.2006**
(21) Application number: 06380091.6
(22) Date of filing: 21.04.2006
(51) Int. Cl.: A01M 1/08, A01M 1/02

(54) **Insect suction apparatus**

(30) Priority: 27.04.2005 ES 200500938 U
(71) Applicant: Moreno Martinez, Miguel, 08320 El Masnou (Barcelona) (ES)
(72) Inventor: Moreno Martinez, Miguel, 08320 El Masnou (Barcelona) (ES)
(74) Representative: Durán Moya, Carlos

(57) **Abstract**

The apparatus comprises a carrying body (1) provided with a bag (14) for collecting insects which is connected to a suction mouth (7), the suction action being effected through the inside of the apparatus by means of a motor-driven unit (15), the apparatus also comprising luminous devices (16) for attracting insects and at least one attraction support (17) having chemical action, and it is characterized in that the luminous devices for attracting insects are located inside the suction mouth (7).

## Description

The present invention relates to an insect suction apparatus which has notable features of novelty and inventive step.

In particular, the present invention relates to an insect suction apparatus of the electrical/electronic type which is to eliminate insects by the attraction and suction thereof. This type of insect suction apparatus generally comprises four active stages or sectors: attraction, detection or location, suction and elimination.

Spanish Utility Model ES1054744U, belonging to the inventor of the present invention, disclosed an insect suction apparatus of this type which comprises a body carrying a bag for collecting insects which is impregnated with an insecticide and which is connected to a suction mouth effecting suction through the inside of the apparatus by means of a motor-driven unit. The body of the apparatus supports at the top a dome carrying a series of high-luminosity LEDs and an attraction support having chemical action in order to attract the insects to the suction mouth located at the upper portion of the carrying body, below the dome. The inlet mouth is subjected to suction action for the collection of insects in the internal bag having an insecticidal effect. In order to increase the attractive effect, the apparatus may also comprise a reflective internal surface for reflecting the illumination of the LEDs. In use, the insects are attracted by the odour of the chemical elements and the light at the lower surface of the dome, where they are drawn in by the suction action of the suction mouth.

Although that apparatus clearly has advantages over the prior art, the inventor, after numerous tests and studies, has succeeded in developing a series of improvements over the above-mentioned insect suction apparatus which substantially increase the efficiency of the said type of apparatus.

In particular, the present invention consists in an insect suction apparatus of the type mentioned above which comprises a carrying body provided with a bag for collecting insects which is connected to a suction mouth, the suction action being effected through the inside of the apparatus by means of a motor-driven unit, the apparatus also comprising luminous devices for attracting insects and at least one attraction support having chemical action. According to the present invention, the luminous devices for attracting insects are located inside the suction mouth. Preferably, the suction mouth is located in the uppermost region of the insect suction apparatus.

Owing to the arrangement of the luminous devices inside the suction mouth, it is possible to dispense with the dome provided in the apparatuses of this type known hitherto. This increases the efficiency of the insect suction apparatus because the insects are attracted directly to the suction mouth and therefore the suction action will be more effective. In addition, this increase in efficiency is achieved with a simpler and stronger construction of the apparatus.

Also in order to increase the suction efficiency by increasing the attraction capacity, the luminous devices preferably direct the light they emit outwards and upwards and, more preferably, they comprise means, for example prisms, for diffusing the light in the environment of the suction mouth. Thus, it is possible to dispense with the mentioned reflective surfaces which were provided in the apparatus known hitherto.

Likewise, in order to increase the efficiency of attraction, the chemical attraction support or supports of the apparatus is/are preferably arranged in the internal region of the mentioned carrying body in such a manner that they emit scent through the suction mouth.

Likewise, according to the tests carried out by the inventor of the present invention, the suction efficiency of the apparatus is optimum if, once a flying insect to be eliminated has been detected, the apparatus maintains a suction action through the suction mouth for a period of from 4 to 10 seconds.

For a better understanding of the invention, some drawings of a preferred embodiment of the present invention are appended by way of non-limiting example.

Figure 1 is a perspective view of an embodiment of the apparatus forming the subject-matter of the present invention.

Figure 2 is a top view of the embodiment of Figure 1.

Figure 3 is a front view of the apparatus of Figures 1 and 2 which has been sectioned on its centre plane, in which the main elements present inside the apparatus have been shown schematically.

Figure 4 is a flow chart showing schematically the operating principle of a possible embodiment of an electrical/ electronic system of an apparatus according to the present invention.

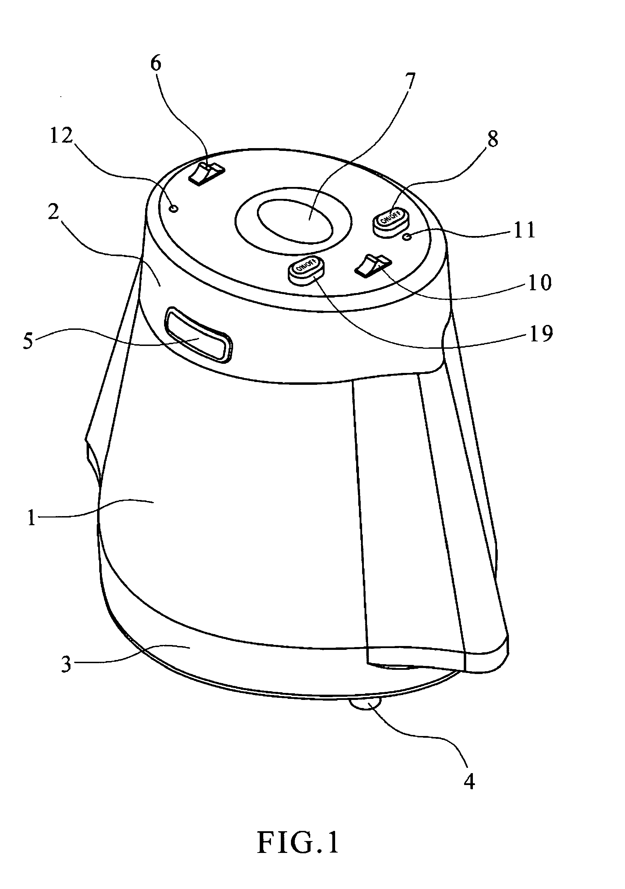

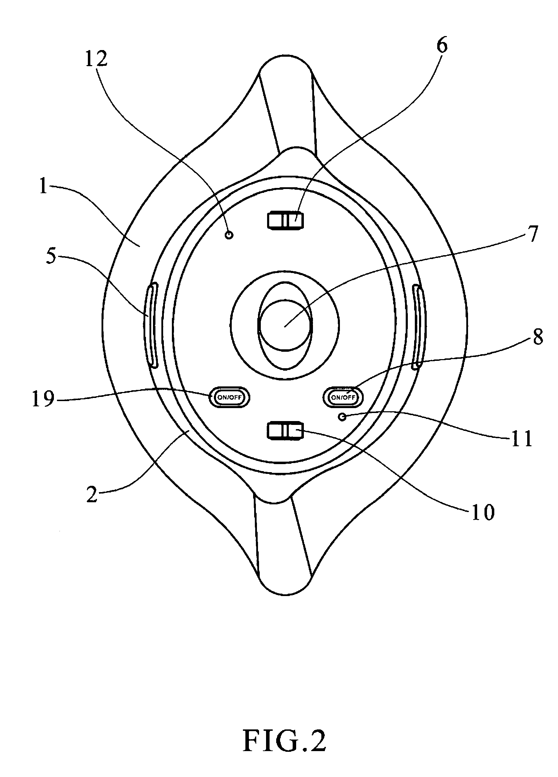

As can be seen in Figures 1 to 3, the embodiment shown comprises a carrying body 1 which in turn comprises an upper region, such as, for example, a removable upper lid 2. The carrying body 1 also comprises a lower support base 3 which may be used to support the internal elements. The lower surface of the base 3 may have a series of seating protuberances for accommodating adhesive rubber elements or suction pads 4 for fixing the apparatus in position and preventing movement and noise caused during the operation of the apparatus. The upper lid 2 may have push-button-operated latches 5 for securing the lid to the body 1. The suction mouth 7 is located in the uppermost portion 2 of the apparatus. In the embodiment shown, the upper portion of the lid 2 also comprises a sliding control 6 for varying the power of the suction motor 15 which has the task of bringing about the suction action through the suction mouth 7, a push-button 8 for switching the apparatus on and off, a further push-button 19 for switching the LEDs on and off, a further sliding control 10 for adjusting the time for which suction is prolonged when the apparatus detects an insect in the vicinity of the suction mouth 7, which in this case has a frustoconical internal shape, a LED 11 for checking the on/off state of the apparatus and a further LED 12 for warning that the insect-collecting bag 14 is full.

As will be appreciated, by dispensing with the dome existing in the prior art, it is possible to arrange all of the controls in the upper portion of the apparatus, which is more convenient for the user.

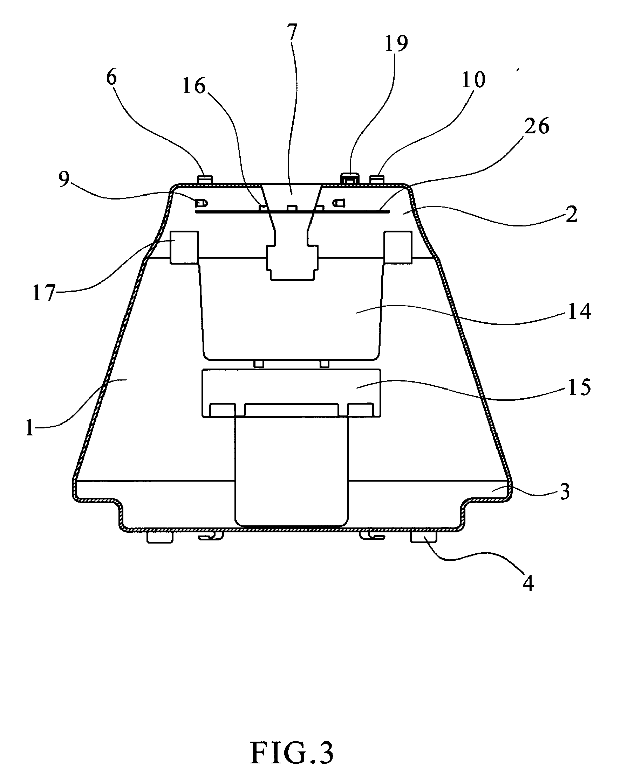

Figure 3 shows the internal elements which will be explained in more detail hereinafter. The embodiment shown comprises a set of emitters and receivers 9 belonging to the infrared detection system of the embodiment shown. The embodiment shown uses detection by infrared emission/reception. For that purpose, infrared detectors 9 of the emitter/receiver type are arranged strategically to direct infrared beams across the inlet area of the suction mouth 7 in its uppermost internal region, in such a manner that the emitters and the receivers are facing each other, so that when any insect intercepts any of the beams the apparatus starts the suction, or increases the intensity of the latter, for a programmed time. According to the tests carried out by the inventor, the optimum suction times are from 4 to 10 seconds. In the embodiment shown, the user can modify the suction time within a predetermined range of values by means of the control 10.

Figure 3 also shows schematically an insect-collecting bag 14 provided with insecticide on which the insects sucked in by the apparatus through the mouth 7 will be caught. The insecticide may be introduced into the bag, for example, in the form of a tablet of insecticide of the DDVP type, the whole being of the replaceable type. The suction mouth 7 is connected to the bag 14 through a suction opening located inside the suction mouth 7, which opening has a non-return diaphragm for preventing the mosquitoes sucked in from returning. The diaphragm may be produced from an elastomer resistant to attack from insect bites.

The motor-driven unit of the apparatus comprises a motor 15 which is to create the suction action through the suction mouth 7. The motor may preferably be of the rapid-start turbine type which can be supplied with power from the mains, has a high r.p.m., with a maximum range up to 18000 r.p.m. at maximum power of 700 W, said range being controlled by a power variator. The motor may be fitted with insulators and means suitable for reducing the noise produced during operation. In the embodiment shown, the motor brings about a suction action in the suction mouth of from 1260 to 1540 mm of a water column.

In the embodiment shown, the illumination devices for attracting insects consist in a series of high-luminosity LEDs 16 which emit white light outwards and upwards from the suction mouth 7. In the embodiment shown, the LEDs are located inside the suction mouth 7, positioned around it, and may be covered with transparent glass or plastics material which is resistant to high temperatures and chemical agents and which is cut in the form of a prism in order to diffuse the light in the vicinity of the suction mouth. Thus, the luminosity of the LEDs 16 is emitted outwards and upwards, projecting an illuminated region in the form of a circle around the mouth, which region extends along the inside of the suction mouth 7, so that insects will be attracted to the inside thereof without the need to use any reflective surface like that used in the apparatuses known hitherto. The number of LEDs 16 may vary as a function of the desired characteristics of the apparatus and the power of the LEDs.

The embodiment shown also comprises two chemical attraction supports 17 which are located inside the body 1 and which may consist in devices which accommodate an attractant which may comprise, for example, pheromones or bait in the form of food. Optionally, the devices may be heated by a resistive heater element (not shown) in order to increase the rate of evaporation.

Finally, the embodiment shown also comprises an electronic card 26 in which the electrical elements of the apparatus are incorporated.

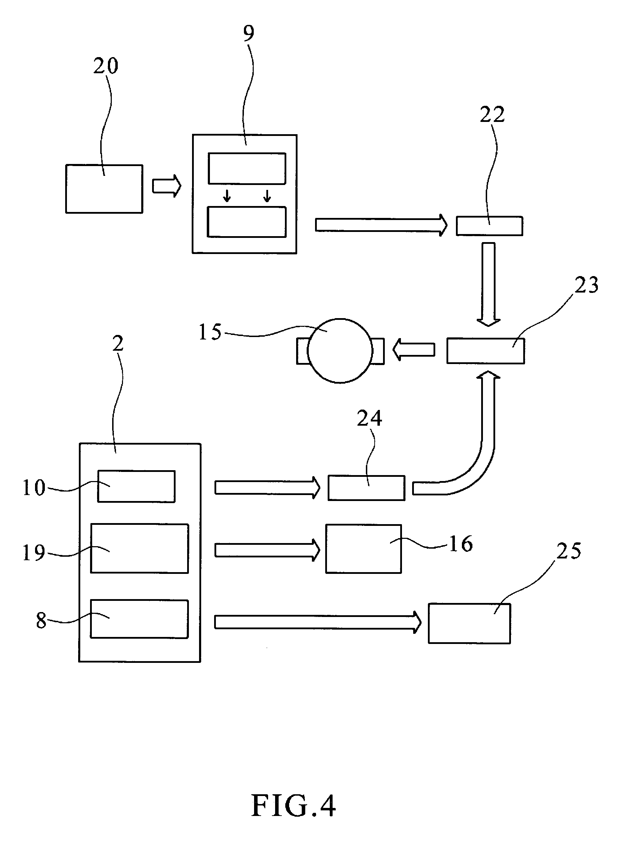

Figure 4 shows schematically the operating principle of an electrical circuit of an apparatus according to the present invention in which a modulating circuit 20 controls the detection system 9 which comprises, for example, infrared emitters and receivers and which, after detecting 22 an insect, sends an order to the control 23 of the motor 15, for example, for it to start suction, and the latter maintains the suction action for the time specified by the timer 24. That time may be varied by the user by means of the time-selector control 10 mentioned above. The high-luminosity LEDs 16 are activated or deactivated by an on/off push-button 19. On the other hand, the supply circuit which provides electrical power for all of the systems of the apparatus is controlled by the control 8 for switching the system on and off.

There are numerous variations which will be apparent to the person skilled in the art and which are within the scope of the present invention.

## Claims

1. Insect suction apparatus, of the type which comprises a carrying body provided with a bag for collecting insects which is connected to a suction mouth, the suction action being effected through the inside of the apparatus by means of a motor-driven unit, the apparatus also comprising luminous devices for attracting insects and at least one attraction support having chemical action, **characterized in that** the luminous devices for attracting insects are located inside the suction mouth.

2. Apparatus according to claim 1, **characterized in that** the luminous devices direct the light they emit outwards and upwards.

3. Apparatus according to claim 1 or 2, **characterized in that** the luminous devices comprise means for diffusing the light in the vicinity of the suction mouth.

4. Apparatus according to claim 3, **characterized in that** the means for diffusing the light comprise prisms.

5. Apparatus according to any one of claims 1 to 4, **characterized in that** the luminous devices project a region of light which surrounds the suction mouth.

6. Apparatus according to any one of claims 1 to 5, **characterized in that** the luminous devices comprise high-luminosity LEDs which emit white light.

7. Apparatus according to any one of claims 1 to 6, **characterized in that** the chemical attraction support or supports is/are arranged in the internal region of the mentioned carrying body in such a manner that they emit scent through the suction mouth.

8. Apparatus according to any one of claims 1 to 7, **characterized in that** it also comprises means for detecting insects in the region near the suction mouth, which means are capable of bringing about the start-up of the motor-driven unit.

9. Apparatus according to any one of claims 1 to 8, **characterized in that**, once a mosquito to be eliminated has been detected, the apparatus maintains a suction action through the suction mouth for a period of from 4 to 10 seconds.

10. Apparatus according to any one of claims 1 to 9, **characterized in that** the motor-driven unit comprises a rapid-start motor having a maximum power of approximately 700 W, being capable of generating a suction action in the suction mouth equivalent to from 1260 to 1540 mm of a water column.

11. Apparatus according to any one of claims 1 to 10, **characterized in that** it comprises infrared detectors of the emitter/receiver type.

12. Apparatus according to any one of claims 1 to 11, **characterized in that** the suction mouth is located in the uppermost region of the insect suction apparatus.
